# EUROPÄISCHE PATENTSCHRIFT

(11) **EP 2 218 932 B1**
(45) Veröffentlichungstag und Bekanntmachung des Hinweises auf die Patenterteilung: **09.05.2012**
(21) Anmeldenummer: 10152599.6
(22) Anmeldetag: 04.02.2010
(51) Int. Cl.: F16D 55/227, F16D 55/2265

(54) **Fahrzeugscheibenbremse**
Vehicle disk brake
Freins à disque de véhicule

(30) Priorität: 04.02.2009 DE 102009007330
(43) Veröffentlichungstag der Anmeldung: 18.08.2010
(73) Patentinhaber: BPW Bergische Achsen KG, 51674 Wiehl (DE)
(72) Erfinder: Leidig, Hans-Josef, 51580, Reichshof (DE); Abt, Christian, 51643, Gummersbach (DE)
(74) Vertreter: Christophersen & Partner

(56) Entgegenhaltungen:
- WO-A1-2005/071280
- DE-A1- 10 341 095
- DE-A1- 19 731 696
- DE-A1-102006 050 647

## Beschreibung

Die Erfindung betrifft zunächst eine Fahrzeugscheibenbremse, mit einem achs- oder fahrwerksfest angeordneten Bremsträger und einem an mindestens einem Festlager und einem Loslager axial verschieblich gegenüber dem Bremsträger gelagerten Bremssattel, wobei sich das Festlager zusammensetzt aus einer zylindrischen Bohrung mit einer darin eingepressten starren Lagerbuchse und einem in der Lagerbuchse axial gleitbeweglichen Führungszapfen. Die Erfindung betrifft ferner eine starre Festlagerbuchse einer schwimmend gelagerten Fahrzeugscheibenbremse.

Eine Fahrzeugscheibenbremse mit diesen Merkmalen ist aus der DE 103 11 896 A1 bekannt. Sie arbeitet nach dem Schwimmsattelprinzip und der Bremssattel ist an einem Festlager und an einem Loslager axial verschieblich auf Führungszapfen geführt, die an dem Bremsträger befestigt sind. Wie üblich ist das Festlager mit sehr geringem Gleitspiel ausgebildet, während die andere Führung, d. h. das Loslager, zum Ausgleich von Fertigungstoleranzen ausgebildet ist. Das Festlager setzt sich zusammen aus einer in eine zylindrische Bohrung des Bremssattels eingepressten, zylindrischen Festlagerbuchse, in welcher der Führungszapfen des Bremsträgers gleitbeweglich geführt ist. Während also die Festlagerbuchse durch einen Presssitz im Bremssattel fixiert ist, wird die Lagerbuchse des Loslagers an ihrem einen Ende mit einer Verformung versehen, welche formschlüssig in eine Ausnehmung der die Lagerbuchse aufnehmenden Bohrung des Bremssattels hineinragt. Hierzu weist die Lagerbuchse im Verformungsbereich eine innere und äußere Kontur auf, die von der Kreisform abweicht. Dies führt zu einer Fixierung der Lagerbuchse des Loslagers sowohl in Umfangsrichtung, als auch in Längsrichtung.

Aus der DE 43 34 914 A1 ist es zur axialen Fixierung einer Festlagerbuchse bekannt, diese in etwa auf der Mitte ihrer Länge radial nach außen zu verstemmen, wobei Material der Buchse in Ausnehmungen gelangt, die sich auf einem mittleren Längsabschnitt der Bohrung befinden. Die so erzielte Sicherung gegen Längsbewegungen der Festlagerbuchse bedingt einen erhöhten fertigungstechnischen Aufwand, da in einem zusätzlichen Fertigungsschritt die Bohrung mit Ausnehmungen versehen werden muss, und da außerdem ein Spezialwerkzeug benötigt wird, um Material der zunächst vorläufig positionierten Lagerbuchse in die Ausnehmungen hinein zu verstemmen.

Aus der DE 103 41 095 A1 und der DE 10 2006 050 647 A1 sind Fahrzeugscheibenbremsen bekannt, bei denen das den Toleranzausgleich ermöglichende Loslager der Scheibenbremse neben dem eigentlichen Ausgleichselement mit Buchsen versehen sind, die auf einem Teil ihrer axialen Länge eine radiale Aufweitung oder Stufe aufweisen, um so die Buchse in Längsrichtung zu positionieren.

Aus der DE 197 31 696 A1 ist eine Schwimmsattel-Scheibenbremse bekannt, bei der, ähnlich der oben erwähnten DE 43 34 914 A1, zur axialen Fixierung der Festlagerbuchse diese in etwa auf ihrer Mitte mit Maßnahmen versehen ist, um die Festlagerbuchse gegen Längsbewegungen zu sichern. Auch diese Art der Sicherung führt zu einem erhöhten fertigungstechnischen Aufwand, da zusätzliche Maßnahmen im Bereich der Bohrung des Bremssattels erforderlich sind.

Der Erfindung liegt die Aufgabe zugrunde, bei einer Fahrzeugscheibenbremse der eingangs angegebenen Art die Lagerbuchse des Festlagers in dem für eine dauerhaft zuverlässige Funktion der Scheibenbremse erforderlichen Umfang mit einfachen Mitteln in Längsrichtung zu sichern. Ferner soll eine geeignete Festlagerbuchse geschaffen werden.

Zur Lösung der Aufgabe wird eine Fahrzeugscheibenbremse mit den Merkmalen des Patentanspruchs 1 und ferner eine Festlagerbuchse mit den Merkmalen des Patentanspruchs 10 vorgeschlagen.

Die Erfindung beruht auf der Erkenntnis, dass die beim Stand der Technik getroffenen Maßnahmen zur Axialsicherung der eingepressten Festlagerbuchse über den eigentlich für eine dauerhaft zuverlässige Funktion der Scheibenbremse erforderlichen Umfang hinaus gehen, indem ein übertriebener und letztlich die Kosten erhöhender Aufwand betrieben wird. Denn es hat sich herausgestellt, dass es für eine ausreichende Sicherung der Festlagerbuchse nicht zwingend ist, diese in beiden denkbaren Längsrichtungen gleichermaßen zu sichern. Vielmehr ist es für eine dauerhaft zuverlässige Funktion der Scheibenbremse bereits ausreichend, wenn die eingepresste Festlagerbuchse in Richtung zu dem Bremsträger hin in besonderer Weise lagegesichert ist, zumindest aber ihre Beweglichkeit in diese Richtung eingeschränkt ist. In die entgegengesetzte Richtung, d. h. von dem Bremsträger weg, sind besondere Maßnahmen zur Lagesicherung nicht erforderlich.

Ursächlich für diese Asymmetrie sind die beim Anlegen der Bremsbacken an die Bremsscheibe entstehenden Mitnahmekräfte, welche von dem Bremssattel bzw. dessen Lagerung aufgenommen werden müssen. Es entstehen in der schwimmenden Lagerung Querkräfte, welche eine Gefahr des Verklemmens der Lagerbuchse auf dem Führungszapfen darstellen. Unter diesen Kräften wird der Bremssattel durch die steigenden Zuspannkräfte noch über einen gewissen Weg weiter über den Führungszapfen verschoben, bis die gewünschte Bremskraft erreicht ist. Bei dieser Restbewegung im Zuspanngeschehen kann es zu einem Verklemmen der Lagerbuchse kommen. Übersteigen die Klemmkräfte den genannten Reibschluss, wird die Lagerbuchse auf dem Führungszapfen gehalten, während der Bremssattel noch geringfügig verschoben wird. Als Folge wandert die Lagerbuchse, obwohl sie in einer Presspassung sitzt, aus der Gehäusebohrung des Bremssattels in Richtung Bremsträger. Besonders hohe Querkräfte entstehen bei Scheibenbremsen mit rahmenlosem Bremsträger. Bei dieser Bauart ist der äußere Bremsbelag ausschließlich durch den schwimmend gelagerten Bremssattel aufgenommen.

Mit der Erfindung wird ein Lösungsweg beschritten, der dieser Asymmetrie der im Praxiseinsatz auf die Festlagerbuchse einwirkenden Kräfte Rechnung trägt. Dies wird unter Einsatz technisch einfacher Mittel dadurch erreicht, dass die Lagerbuchse mit jenem Ende, welches dem Bremsträger abgewandt ist, aus der Bohrung des Bremssattels herausragt, und an diesem Ende mit einer radialen Erweiterung versehen ist. Vorzugsweise handelt es sich bei der Lagerbuchse um ein vorgefertigtes und vorgeformtes Bauteil, welches mit seinem geraden, zylindrischen Längsabschnitt voran in die Bohrung des Bremssattels hineingetrieben wird. Zusätzliche Befestigungsschritte, etwa ein bereichsweises Verstemmen der Lagerbuchse, sind nicht erforderlich.

Von Vorteil ist, dass der Presssitz der Lagerbuchse in der Bohrung moderat und insbesondere moderater ausfallen kann, als bei der ausschließlich zylindrischen Festlagerbuchse nach der DE 103 11 896 A1. Denn dort ist der Presssitz der einzige Sicherungsmechanismus. Je stärker jedoch die Presspassung ist, desto mehr wird die Lagerbuchse zusammengestaucht mit der Folge einer Reduzierung ihrer das Gleitlager bildenden Innenbohrung. Es kann daher erforderlich werden, die Lagerbuchse nach dem Einpressen neu zu kalibrieren. Dieser Aufwand lässt sich vermeiden wenn erfindungsgemäß Maßnahmen getroffen sind, mit einem moderateren Presssitz auszukommen.

Mit einer Ausgestaltung der Erfindung wird in dem Bremssattel eine sich an die zylindrische Bohrung anschließende Ausnehmung vorgeschlagen, die den erweiterten Längsabschnitt der Lagerbuchse aufnimmt. Vorzugsweise sind die Innenkontur der Ausnehmung und die Außenkontur des erweiterten Längsabschnitts zumindest bereichsweise korrespondierend gestaltet. Vorzugsweise ist ferner die axiale Länge der Ausnehmung größer als die axiale Länge des erweiterten Längsabschnitts.

Mit einer weiteren Ausgestaltung wird vorgeschlagen, dass die äußerste Kante der Lagerbuchse mit einer an den Bremssattel ausgebildeten Stirnfläche abschließt, bis zu der sich die Ausnehmung in Längsrichtung erstreckt.

Mit einer weiteren Ausgestaltung wird vorgeschlagen, dass der erweiterte Längsabschnitt der Lagerbuchse zumindest über einen Teil seiner Länge als sich zu der Stirnfläche der Lagerbuchse hin erweiternder Konus gestaltet ist. Auch die Ausnehmung in dem Bremssattel kann, zumindest auf einem Teil ihrer Länge, konisch gestaltet sein, wobei ihr Konuswinkel gleich dem Konuswinkel des konisch erweiterten Längsabschnitts der Lagerbuchse ist.

Ein Ausführungsbeispiel der Erfindung wird nachfolgend anhand der Zeichnungen erläutert. Darin zeigen:
- Fig. 1: in perspektivischer, zum Teil geschnittener Ansicht eine Fahrzeugscheibenbremse in schwimmender Bauart des Bremssattels, wobei die Bremsscheibe und die Bremsbeläge der Scheibenbremse weggelassen sind;
- Fig. 2: eine vergrößerte Schnittdarstellung des in Fig. 1 mit II bezeichneten Bereichs der Bremssattelführung und
- Fig. 3: eine nochmals vergrößerte Schnittdarstellung des in Fig. 2 mit III bezeichneten Bereichs der Bremssattelführung.

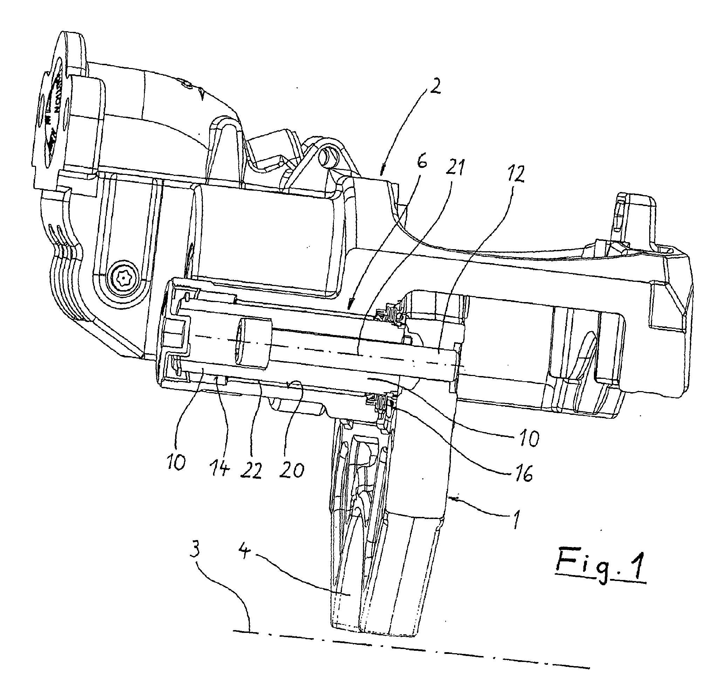

Die in Fig. 1 wiedergegebene Scheibenbremse für ein Fahrzeug und insbesondere für einen Schwerlast-Nutzfahrzeuganhänger besteht in erster Linie aus einem Bremsträger 1 und einem schwimmend, d. g. gleitbeweglich an dem Bremsträger 1 befestigten Bremssattel 2. Andere, ebenfalls wichtige Bauteile der Scheibenbremse sind nicht wiedergegeben, da im Rahmen der Erläuterung der Erfindung weniger bedeutsam. Dies gilt etwa für die um die Drehachse 3 drehbare Bremsscheibe, und für die Bremsbeläge der Scheibenbremse.

Der Bremsträger 1 ist ein so genannter rahmenloser Bremsträger. Er ist flach gestaltet und umgreift oder übergreift die Bremsscheibe nicht. Er erstreckt sich parallel zur Bremsscheibe sowie quer zu der Drehachse 3 der Bremsscheibe und er ist mittels einer maulartigen Öffnung 4 fest an einem Fahrwerksteil des Fahrzeugs befestigbar, und zwar hier an einem Achskörper, von dem nur dessen Mittellinie 3 bezeichnet ist. An seinem Ende ist der Achskörper mit der Lagerung für das Fahrzeugrad und die Bremsscheibe versehen, die sich daher beide um die mit der Mittellinie 3 zusammenfallende Drehachse drehen.

Der Bremsträger 1 ist, dem Achskörper abgewandt, mit einer Ausnehmung versehen, in welcher mit geringem Spiel der fahrzeuginnere der beiden Bremsbeläge sitzt, so dass die Bremsmomente von diesem Belag unmittelbar auf den Bremsträger 1 abgeführt werden. Der äußere der beiden Bremsbeläge hingegen sitzt in dem Bremssattel 2, welcher zu diesem Zweck mit Abstützflächen versehen ist, welche die Bremsmomente des äußeren Bremsbelags aufnehmen.

Die so an dem schwimmend gelagerten Bremssattel 2 wirkenden Brems- bzw. Bremsreaktionsmomente müssen auf den fahrwerksfesten Bremsträger 1 übertragen werden. Zu diesem Zweck ist der Bremssattel 2 über zwei Führungen gleitbeweglich an dem Bremsträger 1 angeordnet. Als Führungen dienen ein auf der Zeichnung dargestelltes Festlager 6 und ein Loslager. Als Festlager 6 wird eine präzise arbeitende Axialführung bezeichnet, welche im Bremsbetrieb den Bremssattel 2 parallel zu der Drehachse 3 führt, um so die Bremsbeläge gegen die rotierende Bremsscheibe zu bewegen.

Damit die Führungen und insbesondere das Festlager 6 verkantungsfrei arbeiten, benötigen deren zueinander gleitenden Elemente eine ausreichende axiale Länge. Seitens des Bremsträgers 1 gehört zu dem Festlager 6 ein länglicher Führungszapfen 10, der mittels einer in seinem Inneren angeordneten Schraube 12 starr gegen den Bremsträger 1 befestigt ist. Die glatt bearbeitete zylindrische Außenseite 14 des Führungszapfens 10 bildet die erste Gleitfläche des Festlagers 6.

Seitens des Bremssattels 2 gehört zu dem Festlager 6 eine in eine Bohrung 20 des Bremssattels 2 eingesetzte, starre Lagerbuchse 22. Die Bohrung 20 ist zylindrisch und unmittelbar im Material des Bremssattels ausgebildet. Die Lagerbuchse 22 ist eine z.B. aus Messing oder Kupfer bestehende, dauergeschmierte Gleitlagerbuchse. An ihrer Innenwandung 24, die die zweite Gleitfläche des Festlagers 6 bildet, ist sie mit geeigneten Schmierstoffkanälen 23 versehen.

Die Festlagerbuchse 22 ist auf dem überwiegenden Teil ihrer Länge gerade, d.h. kreiszylindrisch, so dass sie bei der Montage der Scheibenbremse in Längsrichtung in die kreiszylindrisch bearbeitete Bohrung 20 des Bremssattels 2 eingepresst werden kann. Hierzu weisen die Teile 20, 22 entsprechende Passungen für einen Presssitz auf. Gleichwohl kann es passieren, dass sich die Lagerbuchse 22 im Bremsbetrieb, der durch ein häufiges Hin- und Herfahren des Bremssattels 22 gekennzeichnet ist, geringfügig axial gegenüber dem Bremssattel 2 bewegt. Diese Längsbewegungen im Lastfall zu ermöglichen, sie jedoch auch zu kontrollieren, ist ein wichtiger Aspekt der Erfindung. Denn die bei der Längsbewegung des Bremssattels 2 auf die darin eingepresste Lagerbuchse 22 wirkenden Mitnahmekräfte fallen in den beiden Bewegungsrichtungen des Bremssattels 2 unterschiedlich groß aus. Bei Betätigung der Bremse bewegt sich der Bremssattel 2 in Fig. 1 von rechts nach links. Da dies unter Last erfolgt, kommt es zu einer gewissen Verkantung mit der Folge örtlich stark erhöhter Reibungseffekte. Diese führen zu einer Tendenz des Führungszapfens 10, die ihn umgebende Lagerbuchse 22 festzuhalten. Im umgekehrten Fall hingegen, d.h. beim Lösen der Bremse mit Bewegung des Bremssattels 2 von links nach rechts, fehlen solche verkantungsbedingten Reibungs- und Mitnahmekräfte. Denn es kommt zu keiner nennenswerten Längskraft zwischen Bohrung 20 und Lagerbuchse 22.

Die Festlagerbuchse 22 zeigt daher im Laufe der Zeit die überwiegende Tendenz, innerhalb der Bohrung 20 zu dem Bremsträger 1 hin zu wandern, weshalb diese und nur diese Bewegungsrichtung eine Begrenzung erfordert. Hingegen bedürfen andere Bewegungsmöglichkeiten der Festlagerbuchse 22 keiner Kontrolle oder Einschränkung. Dies gilt insbesondere für die Möglichkeit der Buchse 22, sich ungehindert um ihre eigene Mittelachse 21 zu drehen.

Um ein Austreten des Schmierfetts zu verhindern, sind die Bohrung 20 und die Lagerbuchse 22 an ihren dem Bremsträger 1 zugewandten Enden vollständig gegenüber der Umgebung abgedichtet. Hierzu befindet sich dort eine als Faltenbalg gestaltete Dichtung 16, welche einerseits gegen das dortige Ende des Führungszapfens 10, und andererseits gegen eine in Verlängerung der Bohrung 20 angeordnete Ausnehmung im Bremssattel 2 abdichtet.

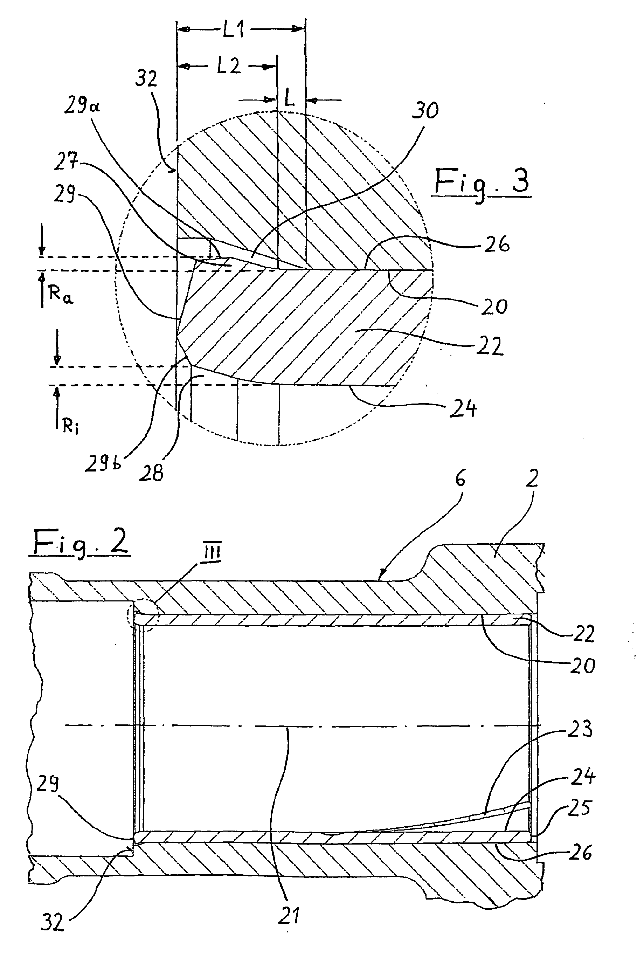

Die Fign. 2 und 3 zeigen Einzelheiten der Gestaltung der Lagerbuchse 22 und deren Sitzes in der Bohrung 20 des Bremssattels 2. Nach rechts, d. h. zu dem Bremsträger 1 hin, weisen Bohrung 20 und Lagerbuchse 22 keinerlei gegenseitige Formschlusselemente oder Formschlussstrukturen auf. Die Bohrung 20 erstreckt sich dort etwas über die Stirnfläche 25 der Lagerbuchse 22 hinaus, und auch im Übrigen ist im Bereich dieses Endes des Festlagers 6 nichts dafür getan, axiale Bewegungen der Lagerbuchse 22 gegenüber der Bohrung 20 zu verhindern oder zu begrenzen.

An dem anderen, also an dem dem Bremsträger 1 abgewandten Ende der Lagerbuchse 22, welches die Fig. 3 in vergrößertem Maßstab zeigt, sind hingegen Formschlussmaßnahmen getroffen, um axiale Bewegungen der Lagerbuchse 22 gegenüber der Bohrung 20 zu begrenzen. Die ansonsten längs ihrer Innenwandung 24 und ihrer Außenwandung 26 kreiszylindrisch gestaltete Lagerbuchse 22 ist an diesem Ende auf einem Längsabschnitt 27 der Länge L2 radial erweitert. Die Erweiterung ist teilweise konisch, wobei der Konus die Kreisform wahrt, er also wie ein Kreiskegelstumpf gestaltet ist. Eine solche Gestaltung ermöglicht eine kostengünstige Herstellung der Lagerbuchse 22. Der Konuswinkel, bezogen auf die Mittelachse 21 des Festlagers 6, beträgt zwischen 10 Grad und 35 Grad. Es ergibt sich daher eine Gestaltung des Buchsenendes, bei der es auf der Länge L2 gegenüber der übrigen, zylindrischen Außenwandung 26 zu einer radialen Erweiterung kommt, deren maximales Maß Ra beträgt. Entsprechend weist auch die ebenfalls teilweise konisch verlaufende Innenwandung gegenüber der übrigen, zylindrischen Innenwandung 24, die zugleich die Gleitfläche der Lagerbuchse ist, eine radiale Erweiterung 28 mit dem maximalen Maß Ri auf. Da der Durchmesser auf dem radial erweiterten Längsabschnitt 27 größer ist als der Durchmesser der Bohrung 20, ist die axiale Beweglichkeit der Lagerbuchse 22 nach rechts in den Fign. 1, 2 und 3 auf den maximalen Längsweg L beschränkt.

Die Lagerbuchse 22 kann im Übergang zwischen der außenseitigen konischen Erweiterung 27 und der Stirnfläche 29 mit einer Außenfase 29a versehen sein. Ebenso kann die Lagerbuchse 22 im Übergang zwischen der innenseitigen konischen Erweiterung 29 und der Stirnfläche 29 mit einer Innenfase 29b versehen sein.

Der erweiterte Längsabschnitt 27 befindet sich innerhalb einer in Verlängerung der Bohrung 20 angeordneten Ausnehmung 30 des Bremssattels 2. Die Ausnehmung 30 erstreckt sich über eine Länge L1 bis zu einer an dem Bremssattel 2 ausgebildeten Stirnfläche 32. Die Ausnehmung 30 ist, ausgehend von der Bohrung 20, zumindest auf einem Teil der Länge L1 als konische Erweiterung der zylindrischen Bohrung 20 gestaltet. Auch dieser Konus hat die Gestalt eines Kegelstumpfs, das heißt er wahrt die Kreisform. Sein Konuswinkel ist gleich dem Konuswinkel der konischen Erweiterung 27 der Lagerbuchse 22. Beide Konusflächen können daher flächig aneinander anliegen, sobald es im Laufe der Zeit zu einer Verschiebung der eingepressten Lagerbuchse 22 soweit nach rechts kommt, dass der verbleibende Längsweg L zu Null wird. Da aber dann die Konusflächen flächig aneinander liegen, kommt es selbst bei erhöhtem Längsdruck auf die Lagerbuchse 22 zu keiner nennenswerten Verformung im Übergang zwischen dem zylindrischen und dem konischen Abschnitt der Lagerbuchse 22, und daher zu keinem örtlich erhöhten radialen Druck der Lagerbuchse 22 auf den darin gleitenden Führungszapfen 10.

Bei der Montage wird die Lagerbuchse 22 soweit und auch nur soweit in die Bohrung 20 eingetrieben, dass die Lagerbuchse 22 nicht mehr nach außen über die die Ausnehmung 30 umgebende Stirnfläche 32 vorsteht. Der erweiterte Längsabschnitt 27 der Lagerbuchse 22 befindet sich also vollständig innerhalb der Ausnehmung 30. Das Einpresswerkzeug hat für eine Lagerbuchse gemäß Ausführungsbeispiel einen größeren Durchmesser als der Durchmesser der Ausnehmung 30, so dass das Werkzeug einen Endanschlag an der Stirnfläche 32 findet. Dies hat den Vorteil, dass die Montage ohne weitere fertigungstechnische Maßnahmen erfolgen kann, welche ansonsten erforderlich wären, um ein zu tiefes Einpressen der Lagerbuchse 22 in die Bohrung 20 zu verhindern. Das Verhältnis der Längen L1 zu L2 sorgt dabei für einen verbleibenden Abstand zwischen den genannten Konusflächen.

### Bezugszeichenliste

- 1: Bremsträger
- 2: Bremssattel
- 3: Drehachse, Mittellinie Achskörper
- 4: Öffnung
- 6: Festlager
- 10: Führungszapfen
- 12: Schraube
- 14: Außenseite
- 16: Dichtung
- 20: Bohrung
- 21: Mittelachse
- 22: Lagerbuchse
- 23: Schmierstoffkanal
- 24: Innenwandung
- 25: Stirnfläche der Buchse
- 26: Außenwandung
- 27: erweiterter Längsabschnitt
- 28: Erweiterung
- 29: Stirnfläche der Buchse
- 29a: Außenfase
- 29b: Innenfase
- 30: Ausnehmung
- 32: Stirnfläche

- L: Längsweg
- L1: Länge
- L2: Länge
- Ra: radiales Maß
- Ri: radiales Maß

## Patentansprüche

1. Fahrzeugscheibenbremse, mit einem achs- oder fahrwerksfest angeordneten Bremsträger (1) und einem an mindestens einem Festlager (6) und einem Loslager axial verschieblich gegenüber dem Bremsträger (1) gelagerten Bremssattel (2), wobei sich das Festlager (6) zusammensetzt aus einer zylindrischen Bohrung (20) mit einer darin eingepressten starren Lagerbuchse (22) und einem in der Lagerbuchse (22) axial gleitbeweglichen Führungszapfen (10),
**dadurch gekennzeichnet,**
**dass** die Lagerbuchse (22) des Festlagers (6) mit ihrem dem Bremsträger (1) abgewandten Ende aus der Bohrung (20) heraus ragt, und an diesem Ende mit einem radial erweiterten Längsabschnitt (27) versehen ist.

2. Fahrzeugscheibenbremse nach Anspruch 1, **dadurch gekennzeichnet, dass** sich der erweiterte Längsabschnitt (27) innerhalb des Bremssattels befindet.

3. Fahrzeugscheibenbremse nach Anspruch 2, **dadurch gekennzeichnet, dass** der Bremssattel (2) eine sich an die zylindrische Bohrung (20) anschließende und den erweiterten Längsabschnitt (27) aufnehmende Ausnehmung (30) aufweist.

4. Fahrzeugscheibenbremse nach Anspruch 3, **dadurch gekennzeichnet, dass** die Innenkontur der Ausnehmung (30) und die Außenkontur des erweiterten Längsabschnitts (27) zumindest bereichsweise korrespondierend gestaltet sind.

5. Fahrzeugscheibenbremse nach Anspruch 3 oder 4, **dadurch gekennzeichnet, dass** die axiale Länge (L1) der Ausnehmung (30) größer ist als die axiale Länge (L2) des erweiterten Längsabschnitts (27).

6. Fahrzeugscheibenbremse nach einem der Ansprüche 3 bis 5, **dadurch gekennzeichnet, dass** die äußerste Kante der Lagerbuchse (22) mit einer an dem Bremssattel (2) ausgebildeten Stirnfläche (32) abschließt, bis zu der sich die Ausnehmung (30) in Längsrichtung erstreckt.

7. Fahrzeugscheibenbremse nach einem der vorangehenden Ansprüche, **dadurch gekennzeichnet, dass** der erweiterte Längsabschnitt (27) zumindest über einen Teil seiner Länge (L2) als sich zu der Stirnfläche (29) der Lagerbuchse (22) hin erweiternder Konus gestaltet ist.

8. Fahrzeugscheibenbremse nach Anspruch 7, **gekennzeichnet durch** eine Außenfase (29a) und eine Innenfase (29b) im Übergang zwischen dem Konus und der Stirnfläche (29).

9. Fahrzeugscheibenbremse nach Anspruch 7 oder 8, **dadurch gekennzeichnet, dass** auch die Ausnehmung (30) zumindest auf einem Teil ihrer Länge konisch ist und ihr Konuswinkel gleich dem Konuswinkel des konischen erweiterten Längsabschnitts (27) der Lagerbuchse (22) ist.

10. Starre Festlagerbuchse (2) eines schwimmend an einem Bremsträger (1) gelagerten Bremssattels einer Fahrzeugscheibenbremse,
**dadurch gekennzeichnet,**
**dass** die Festlagerbuchse (2) an ihrem dem Bremsträger (1) abgewandten Ende mit einem radial erweiterten Längsabschnitt (27) versehen ist.

11. Festlagerbuchse nach Anspruch 10, **dadurch gekennzeichnet, dass** der erweiterte Längsabschnitt (27) zumindest über einen Teil seiner Länge (L2) als sich zu der Stirnfläche (29) der Festlagerbuchse (2) hin erweiternder Konus gestaltet ist.

12. Festlagerbuchse nach Anspruch 11, **gekennzeichnet durch** eine Außenfase (29a) und eine Innenfase (29b) im Übergang zwischen dem Konus und der Stirnfläche (29).

13. Festlagerbuchse nach einem der Ansprüche 10 bis 12, **gekennzeichnet durch** an deren Innenwandung (24) ausgebildete Schmierstoffkanäle (23).

## Claims

1. A vehicle disc brake, with a brake bracket (1) arranged so as to be fixed with respect to the axle or the chassis, and a brake calliper (2) mounted on at least one fixed bearing (6) and a floating bearing so as to be axially displaceable with respect to the brake bracket (1), wherein the fixed bearing (6) is formed from a cylindrical bore (20) with a rigid bearing bush (22) pressed therein and a guide pin (10) capable of sliding axially in the bearing bush (22), **characterized in that** the bearing bush (22) of the fixed bearing (6) projects out of the bore (20) with its end facing away from the brake bracket (1) and it is provided at this end with a radially enlarged longitudinal portion (27).

2. A vehicle disc brake according to Claim 1, **characterized in that** the enlarged longitudinal portion (27) is situated inside the brake calliper.

3. A vehicle disc brake according to Claim 2, **characterized in that** the brake calliper (2) has a recess (30) adjoining the cylindrical bore (20) and receiving the enlarged longitudinal portion (27).

4. A vehicle disc brake according to Claim 3, **characterized in that** the internal contour of the recess (30) and the external contour of the enlarged longitudinal portion (27) are designed to correspond at least locally.

5. A vehicle disc brake according to Claim 3 or 4, **characterized in that** the axial length (L1) of the recess (30) is greater than the axial length (L2) of the enlarged longitudinal portion (27).

6. A vehicle disc brake according to any one of Claims 3 to 5, **characterized in that** the outermost edge of the bearing bush (22) terminates with an end face (32) which is formed on the brake calliper (2) and as far as which the recess (30) extends in the longitudinal direction.

7. A vehicle disc brake according to any one of the preceding Claims, **characterized in that** the enlarged longitudinal portion (27) is designed, at least over part of its length (L2), in the form of a cone increasing towards the end face (29) of the bearing bush (22).

8. A vehicle disc brake according to Claim 7, **characterized by** an external bevel (29a) and an internal bevel (29b) in the transition between the cone and the end face (29).

9. A vehicle disc brake according to Claim 7 or 8, **characterized in that** the recess (30) is also conical at least on part of its length and its cone angle is equal to the cone angle of the conically enlarged longitudinal portion (27) of the bearing bush (22).

10. A rigid fixed bearing bush (2) of a brake calliper of a vehicle disc brake mounted in a floating manner on a brake bracket (1), **characterized in that** the fixed bearing bush (2) is provided at its end facing away from the brake bracket (1) with a radially enlarged longitudinal portion (27).

11. A fixed bearing bush according to Claim 10, **characterized in that** the enlarged longitudinal portion (27) is designed, at least over part of its length (L2), in the form of a cone increasing towards the end face (29) of the fixed bearing bush (2).

12. A fixed bearing bush according to Claim 11, **characterized by** an external bevel (29a) and an internal bevel (29b) in the transition between the cone and the end face (29).

13. A fixed bearing bush according to any one of Claims 10 to 12, **characterized by** ducts (23) for lubricant formed on its inner wall (24).

## Revendications

1. Frein à disques pour véhicule, comportant un plateau de frein (1) disposé de manière fixe sur l'essieu ou le châssis et un étrier (2) logé sur au moins un palier fixe (6) et un palier libre de manière mobile dans le sens axial par rapport au plateau de frein (1), le palier fixe (6) étant composé d'un alésage cylindrique (20) comportant un coussinet rigide (22) inséré à l'intérieur et un pivot de guidage (10) pouvant glisser dans le sens axial dans le coussinet (22), **caractérisé en ce que** le coussinet rigide (22) du palier fixe (6) dépasse de l'alésage (20) par son extrémité ne faisant pas face au plateau de frein (1) et est pourvu, sur cette extrémité, d'un segment longitudinal (27) élargi dans le sens radial.

2. Frein à disques pour véhicule selon la revendication 1, **caractérisé en ce que** le segment longitudinal élargi (27) est situé à l'intérieur de l'étrier.

3. Frein à disques pour véhicule selon la revendication 2, **caractérisé en ce que** l'étrier (2) comporte une cavité (30) se rattachant à l'alésage cylindrique (20) et logeant le segment longitudinal élargi (27).

4. Frein à disques pour véhicule selon la revendication 3, **caractérisé en ce que** le contour interne de la cavité (30) et le contour externe du segment longitudinal élargi (27) sont réalisés de manière complémentaire, au moins en partie.

5. Frein à disques pour véhicule selon la revendication 3 ou 4, **caractérisé en ce que** la longueur axiale (L1) de la cavité (30) est supérieure à la longueur axiale (L2) du segment longitudinal élargi (27).

6. Frein à disques pour véhicule selon l'une quelconque des revendications 3 à 5, **caractérisé en ce que** l'arête la plus externe du coussinet (22) se termine au niveau d'une surface frontale (32) réalisée sur l'étrier (2), surface frontale jusqu'à laquelle s'étend la cavité (30) dans le sens longitudinal.

7. Frein à disques pour véhicule selon l'une quelconque des revendications précédentes, **caractérisé en ce que** le segment longitudinal élargi (27) est réalisé, au moins sur une partie de sa longueur (L2), sous la forme d'un cône s'élargissant en direction de la surface frontale (29) du coussinet (22).

8. Frein à disques pour véhicule selon la revendication 7, **caractérisé par** un biseau extérieur (29a) et un biseau intérieur (29b) au niveau de la transition entre le cône et la surface frontale (29).

9. Frein à disques pour véhicule selon la revendication 7 ou 8, **caractérisé en ce que** la cavité (30) également a une forme conique au moins sur une partie de sa longueur et que son angle de cône est identique à l'angle de cône du segment longitudinal (27) élargi en cône du coussinet (22).

10. Coussinet rigide de palier fixe (2) d'un étrier de frein à disques pour véhicule, logé de manière flottante sur un plateau de frein (1), **caractérisé en ce que** le coussinet de palier fixe (2) est pourvu d'un segment longitudinal (27) élargi dans le sens radial sur son extrémité ne faisant pas face au plateau de frein (1).

11. Coussinet de palier fixe selon la revendication 10, **caractérisé en ce que** le segment longitudinal élargi (27) est réalisé, au moins sur une partie de sa longueur (L2), sous forme de cône s'élargissant en direction de la surface frontale (29) du coussinet de palier fixe (2).

12. Coussinet de palier fixe selon la revendication 11, **caractérisé par** un biseau extérieur (29a) et un biseau intérieur (29b) au niveau de la transition entre le cône et la surface frontale (29).

13. Coussinet de palier fixe selon l'une quelconque des revendications 10 à 12, **caractérisé par** des canaux à lubrifiant (23) réalisés sur sa paroi interne (24).
